Europäisches Patentamt

European Patent Office

Office européen des brevets

(11) Publication number: **0 109 447**
A1

# (12) EUROPEAN PATENT APPLICATION
published in accordance with Art. 158(3) EPC

(21) Application number: 83901630.0

(22) Date of filing: 27.05.83

Data of the international application taken as a basis:

(86) International application number:
PCT/JP83/00165

(87) International publication number:
WO83/04323 (08.12.83 83/28)

(51) Int. Cl.³: **G 05 B 19/18**
G 05 B 19/42, B 25 J 13/00
B 25 J 19/00

(30) Priority: 28.05.82 JP 89978/82
31.05.82 JP 91461/82

(43) Date of publication of application:
30.05.84 Bulletin 84/22

(84) Designated Contracting States:
DE FR

(71) Applicant: NISSAN MOTOR COMPANY, LIMITED
No.2, Takara-cho, Kanagawa-ku
Yokohama-shi Kanagawa-ken 221(JP)

(72) Inventor: SEKINE, Yoshitada
1-2-4, Sumiyoshi-cho Hoya-shi
Tokyo 202(JP)

(72) Inventor: YOKOTA, Fumiki
5296, Fukuda Yamato-shi
Kanagawa-ken 242(JP)

(74) Representative: Patentanwälte Grünecker, Dr.
Kinkeldey, Dr. Stockmair, Dr. Schumann, Jakob, Dr.
Bezold, Meister, Hilgers, Dr. Meyer-Plath
Maximilianstrasse 58
D-8000 München 22(DE)

(54) METHOD AND DEVICE FOR AUTOMATICALLY ADJUSTING WORKING POSITION OF ROBOT.

(57) A method and a device for automatically adjusting the working position of a robot automatically corrects for discrepancies in the position of each workpiece according to signals from a position detector provided at the working end of the robot. The working end of the robot is positioned by a servo system which consists of a pulse distributor (20), a deviation counter (21), a drive unit (22), and a speed detector (23) on the basis of target position data from a memory (19) and present position data from a present position register (25). After the positioning, discrepancies in the position of the working end of the robot with respect to the workpiece are detected by a detector (26), and a selective reader (30) is operated by a discriminator (27) and a controller (29). The reader (30) outputs correction data RST1-RST12 corresponding to the discrepancies the positions to a movement data calculator (17), this is used to correct the discrepancies in the positions.

FIG.7

·METHOD FOR AUTOMATICALLY CORRECTING WORK
POSITION OF A ROBOT AND DEVICE THEREFOR

TITLE MODIFIED
see front page

## FIELD OF THE INVENTION

The present invention relates to a method and device for automatically compensating for errors in positioning of an industrial robot which is applicable to an automated industrial line, such as automotive vehicle or a vehicle parts manufacturing line. More particularly, the invention relates to a method and device for automatically performing delicate adjustments in order to compensate for errors in positioning at each work position.

## BACKGROUND OF THE INVENTION

In an industrial robot which is used in automotive vehicle or vehicle parts manufacturing lines for supply of parts, fastening operations and so forth, it is very important to repeat required operations skillfully and quickly, and without error. In order to repeat the required operations without error, it is essential to position the working end of the robot accurately. On the other hand, as is well known, industrial robots store co-ordinate data for each work position and perform operations according to a pre-set operation program. Therefore, if the co-ordinates of the work position of each workpiece is constant, it would be possible to accurately position the working end of the robot at the work position by accurately inputting the co-ordinate data for each work position in

- 1 -

one operation. However, in practice, due to errors in each individual workpiece, work positions of the workpieces differ slightly. These errors between individual workpieces become especially significant when the workpieces come from different lots. In this case, it is possible that the positional errors of the work position will exceed tolerances.

The present invention is to solve the foregoing problem in the prior art, by providing a work-position detecting function for the working end of the robot to automatically adjust or compensate for errors in the work position due to errors between individual workpieces or between lots.

Therefore, it is an object of the present invention to provide a method for automatically compensating for discrepancies between the pre-set work position and the actual work position.

Another object of the invention is to provide a device for performing the foregoing automatic compensation.

## SUMMARY OF THE INVENTION

To accomplish the foregoing and other objects, a method for automatic compensation of work position according to the present invention includes an arrangement of a plurality of work-position detectors arranged on the working end of a robot so that specific detectors can detect the work position when the working end is accurately positioned at the work position. The method further includes an automatic compensation of the work position of the robot when the specific detectors do not detect the work position by deriving the direction and distance of deviation based on the position of detectors detecting the work position and by actuating the robot to compensate for the deviation.

According to the preferred embodiment, an automatic compensation method for the work position of a robot comprises

providing a plurality of work-position detecting means on a working end of the robot so that the detecting means have a specific positional relationship with respect to the work position when the working end is accurately positioned at the work position;

checking whether the detecting means satisfies the predetermined specific positional relationship with respect to the work position when the robot is operated according to a pre-set operation program and the work ending is in a pre-set work position;

deriving the nature of deviation of the working end from the work position based on the conditions detected by the detecting means when the detecting means is not in the predetermined specific positional relationship with respect to the work position; and

operating the robot in accordance with the detected deviation in order to compensate for the deviation.

On the other hand, a automatic work-position compensation device for a robot according to the present invention is provided with a plurality of detectors on a working end thereof. Each detector is adapted to produce a detector signal when it is so positioned above the work position that more tahn a predetermined ratio of the detecting area thereof is disposed over the work position. A control unit of the robot is provided with a compensation signal generator circuit for operating the robot to compensate for the offset between the working end and the work position detected on the basis of the combination of detector signals from the detectors. The robot is responsive to the output signal from the compensation signal generator circuit to compensate for the offset between the working end and the work position.

According to the preferred embodiment of the invention, an automatic work position compensation device comprises

a movable arm including a working end for a tightening operation of a screw and the like;

a driving mechanism for driving the movable arm;

a control unit operating the driving mechanism according to a previously specified operation program to position the working end at the work position;

a plurality of work-position detecting means attached to the working end such that a predetermined

- 4 -

combination of detector signals are produced when the working end is accurately positioned at the actual work position and combinations of detector signals indicative of the nature of the offset of the working end from the work position are produced when the working end is offset from the actual work position; and

a compensation signal generating means for feeding a compensation signal to the control unit for operating the movable arm in a direction compensating for the offset, which compensation signal generator means derives the magnitude of the offset between the working end and the work position according to the combination of the detector signals.

## BRIEF DESCRIPTION OF THE DRAWINGS

Fig. 1 is a perspective illustration of a fastening operation by means of a horizontal multi-axis-type robot to which the present invention is applied;

Fig. 2 is an enlarged cut-away view showing the outlines of the automatic screw-tightening tool of Fig. 1;

Fig. 3 is a composite view of an example of detecting elements integrally formed in the end of the automatic screw tightening tool;

Fig. 4 is a circuit diagram of an example of a detecting circuit for the detecting means shown in Fig. 3;

Fig. 5 is a schematic illustration of the relationship between the dimensions of the detecting elements and the hole of the glove box lid;

Fig. 6 is an illustration defining the four detecting elements of the detecting means;

Fig. 7 is a block diagram of an example of a control device for the horizontal multi-axis-type robot shown in Fig. 1 employing the position compensator for the robot according to the present invention;

Fig. 8 is a timing chart clarifying the operations of Fig. 7;

Fig. 9(A) to (D) are schematic illustrations clarifying the compensation process;

Fig. 10 is a flow chart of a operations control which is executed by the control unit shown in Fig. 7;

Figs. 11(A), (B) and (C) are illustrations showing other examples of arrangement of the detecting elements;

Fig. 12 is an enlarged cut-away view of the sensor body of Fig. 1;

Fig. 13 is an enlarged plan view of the sensor body of Fig. 2;

Fig. 14 is a circuit diagram of an example of the detecting circuit,

Fig. 15 is an illustration of the dimensional relationships between the detecting element and the hole of the glove box lid;

Fig. 16 is an illustration defining the reference numerals for nineteen detecting elements in the detecting body;

- 6 -

Fig. 17 is a block diagram of an example of the control device for the horizontal multi-axis-type robot of Fig. 1 containing the positional error detecting device for the robot according to the present invention;

Fig. 18 is timing chart clarifying the operations of the device of Fig. 17;

Fig. 19 to 20 are illustrations clarifying the operation of the positional error arithmetic unit of Fig. 17;

DESCRIPTION OF THE PREFERRED EMBODIMENTS

An embodiment of the present invention will be explained below with reference to the accompanying drawings.

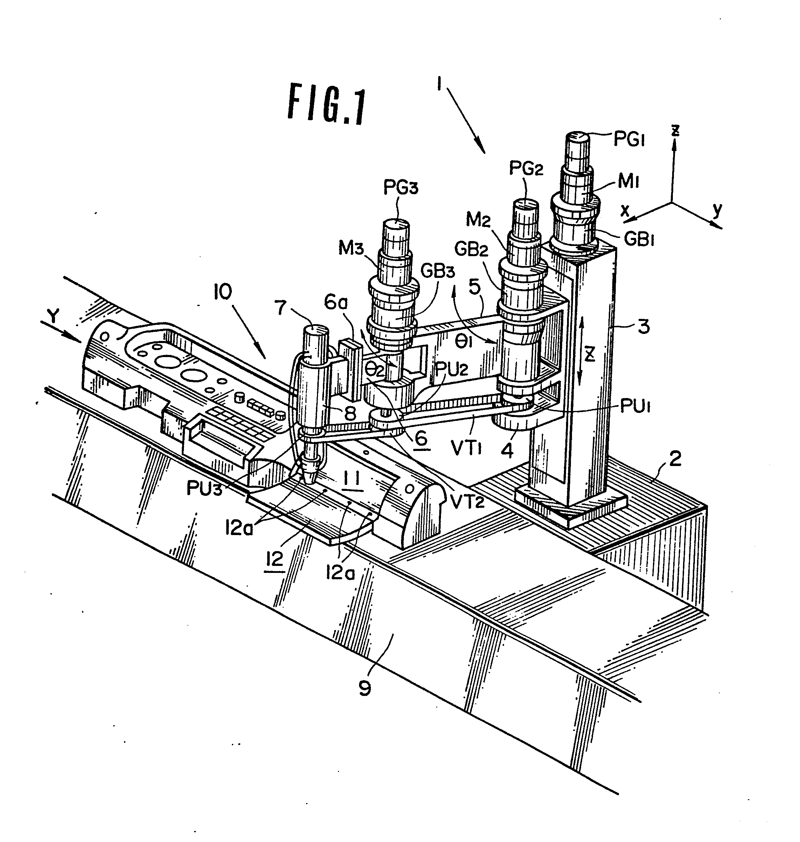

Fig. 1 is a perspective view of a fastening operation by a horizontal multi-axis-type robot to which the present invention is applied.

In this drawing, a horizontal multi-axis-type robot 1, which is also called SCARA-type, comprises a stand 3 fixed upright to a base 2, a lift member 4 movable along the vertical axis of the stand 3 as indicated by the arrows Z, a first arm 5 pivotable in the directions indicated by the arrows $\theta_1$ about the stand 3 in a horizontal plane denoted x - y, a second arm 6 pivotable in the directions indicated by the arrows $\theta_2$ about the free end of the first arm 5 in the same plane x - y, and a wrist 8, secured to an end plate 6a of the second arm 6, to which an automatic screw-tightening device 7, to be described

- 7 -

later, is rotatably attached by means of a bearing.

The lift member 4 is driven by a motor $M_1$ fixedly secured to the stand 3 in the direction represented by the arrow Z with the aid of a decelerating device $GB_1$ and a rotation-to-reciprocation converting mechanism in the stand 3. The first arm 5 is driven in the direction represented by the arrow $\Theta_1$ by a motor $M_2$ mounted on the lift member 4 with the aid of decelerating device $GB_2$.

The second arm 6 is similarly driven in the direction of $\Theta_2$ by a motor $M_3$ mounted on the first arm 5 with the aid of a decelerating device $GB_3$.

In addition, $PG_1$ to $PG_3$ denote pulse generators associated with the output shafts of the corresponding motors $M_1$ to $M_3$, which respectively detect the displaced positions of the lift member 4 and the first and second arms 5 and 6.

Gear pulleys $PU_1$, $PU_2$ are pivotably mounted on shafts joining the lift member 4 and the first and second arms 5 and 6 and a gear pulley $PU_3$ is fixed to the automatic screw-tightening device 7. Toothed belts $VT_1$ and $VT_2$ are threaded over the pulleys $PU_1$, $PU_2$ and $PU_3$. According to this arrangement, operation of the automatic screw-tightening device 7 is independent of the pivotal movement of the first and second arms 5 and 6 in the directions $\Theta_1$ and $\Theta_2$.

This horizontal multi-axis-type robot 1 serves to tighten screws fixing a glove box lid 12 to a glove

box 11 in an instrument panel 10 of an automotive vehicle, which instrument panel is clamped on a work-transporting conveyer 9 arranged in front of the robot 1.

The glove box lid 12 is formed with a plurality of holes 12a into each of which tapping screws are screwed. The holes 12a are preliminarily aligned with corresponding holes formed in the glove box 11 in a step of pre-assembling the glove box lid 12 to the glove box further upstream along the conveyer 9.

There are likely to be positional errors in the holes 12a among different glove box lid workpieces. Thus, the automatic screw-tightening device 7 attached to the end of the robot 1 is so controlled as to compensate for these errors between the position of the hole 12a and that of the working end of the automatic screw-tightening device 7 by means of a position compensating device to be explained later when the device 7 is moved to the previously specified position previously set by means of a dry-run for example.

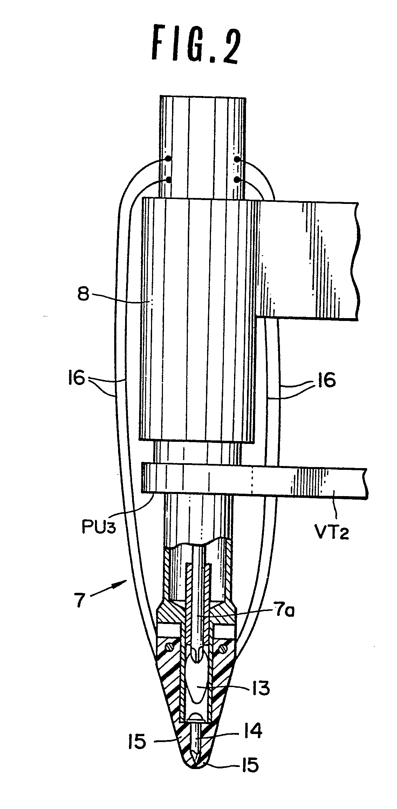

The automatic screw-tightening device 7 will be explained in general terms with reference to Fig. 2.

In Fig. 2, a tapping screw 14 fed from a screw feeding port 13 connected to a screw-feeding tube, not shown, is clamped by chuck claws 15 which are biased to close as shown in the drawing by a return spring, not shown and are made of synthetic resin. The chuck claws 15 are retracted to the work position and then the automatic screw-tightening device 7 is lowered. A bit 7a is advanced with the tapping screw in such a manner that the bit 7a forcingly opens the chuck claws 15. Accordingly, the tapping screw 14 faces the hole formed in the work and the bit 7a is subsequently driven by the internal motor, thereby tightening the screw.

The ends of the chuck claws 15 of this automatic screw-tightening device 7 also serve as a detector which is provided with four detecting elements symmetrically distributed about the ends of chuck claws for detecting the proximity of the holes 12a of the glove box lid 12 of Fig. 1.

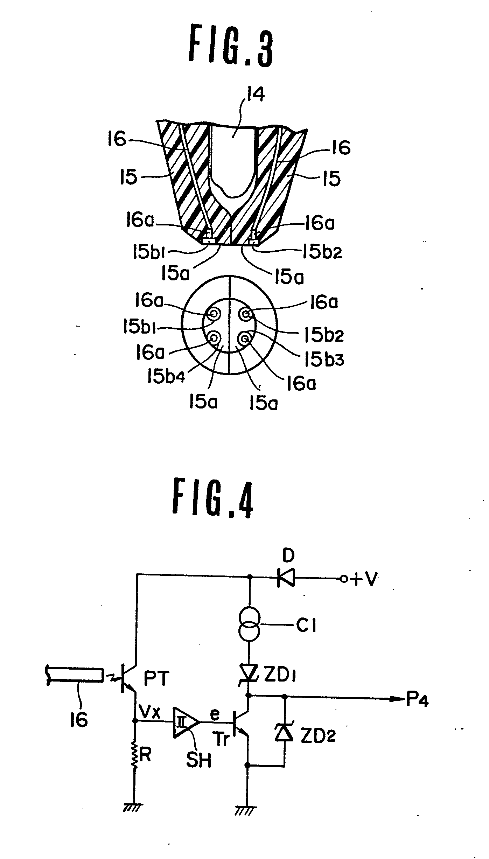

For instance, as shown in Fig. 3 end faces 15a of each of the chuck claws 15 is symmetrically formed with two relief holes $15b_1$ - $15b_4$ having the same outer diameter i.e., four relief holes $15b_1$ to $15b_4$ in total. A light-receiving end face 16a of an optical fiber 16 molded into the chuck claw 15 is disposed at the bottom of each of the relief holes $15b_1$ to $15b_4$.

These four optical fibers 16 are separately connected out of the chuck claws 15 for example as shown in Fig. 2 and to a detecting circuit enclosed in the top portion of the automatic screw tightening device 7.

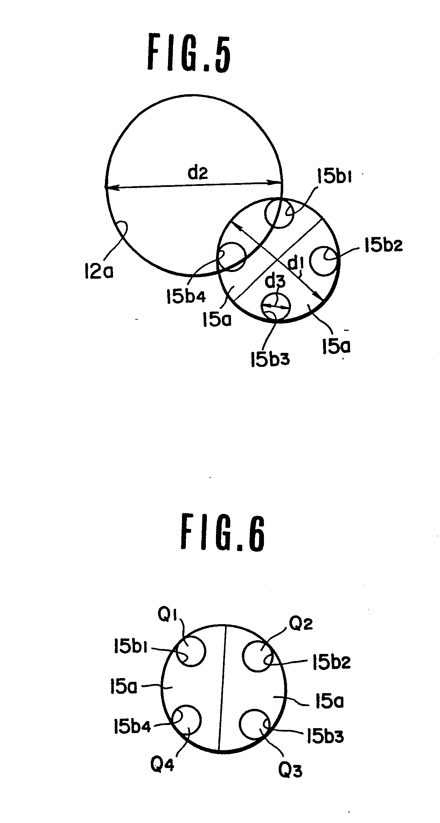

The detecting circuit consists four circuit sections, each configured, for example, as shown in Fig. 4.

These circuit sections operate as follows: light transmitted by way of the optical fiber 16 is supplied to a

· photo-transistor PT which generates an electrical current in relation to the intensity of the light and transmits the current to a resistor R.

The voltage Vx generated across this resistor R is transmitted to, for example a CMOS Schmitt trigger buffer SH. The buffer circuit is so rated that the output $e$ of the buffer SH is "H" when the voltage Vx is higher than the input-threshold level $V_{TH}$ or "L" when the Vx is lower than $V_{TH}$.

For example, assuming the relationship shown in Fig. 5 among $d_1$ of the overall diameter of the end faces 15a, 15a of the chuck claws 15, 15, diameter $d_2$ of the hole 12a in the glove box lid 12, and diameter $d_3$ of each of the relief holes 15b$_1$ to 15b$_4$, the output $e$ is so designed as to output "L" when more than 2/3 of the relief hole 15b$_4$ overlaps the hole 12a as shown, and otherwise "H".

The hole 12a in the glove box lid 12 is arranged to be darker than the rest.

According to this arrangement, when the output $e$ of the Schmitt trigger buffer SH is "L", an output transistor Tr is held off so that output P$_4$ is "1" due to a constant electric current source CI, and when the output $e$ is "H", the output-transistor Tr is turned on so that the output P$_4$ is changed to "0".

In the circuit, a diode D is adapted to prevent a reverse-connection, a Zener diode $ZD_1$ is adapted to prevent back current, and another Zener diode $ZD_2$ is adapted to

damp surges.

As a result, it is possible to detect whether the end face 16a of the optical fiber 16 serving as the detecting part of the relief hole $15b_4$ detects the existence of the hole 12a or not by judging whether the value of output $P_4$ is "1" or "0".

Hereinafter, as shown in Fig. 6 the detecting elements corresponding to the relief holes $15b_1$ to $15b_4$ will be respectively represented as $Q_1$ to $Q_4$ and the outputs from detecting circuits corresponding to the detecting elements $Q_1$ to $Q_4$ will be represented as $P_1$ to $P_4$.

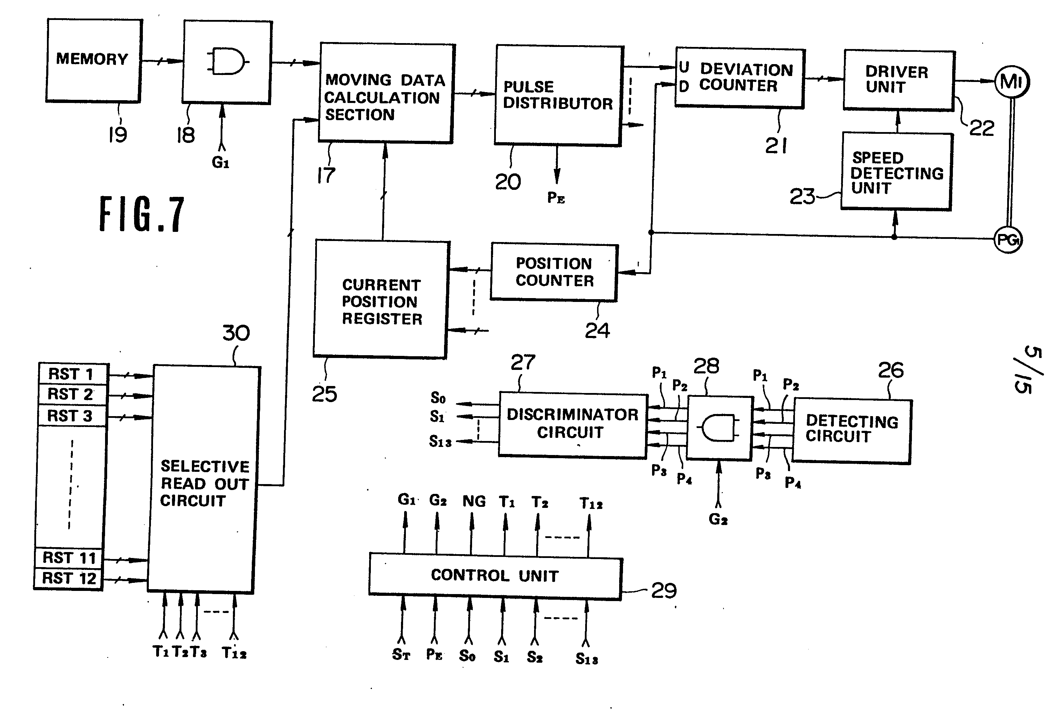

Fig. 7 is a block diagram of the horizontal multi-axis-type robot 1 in Fig. 1 including the position compensating device according to the present invention.

In Fig. 7, the components, specifically a deviation counter 21, a driving unit 22, a speed detecting unit 23, and a position counter 24, following a pulse generator 20 constitute a digital DC servo system for the motor $M_1$ driving the lift member 4 shown in Fig. 1. The other digital DC servo systems for the first and second arms 5, 6 are configured similarly and therefore the other systems are not illustrated.

First of all, the fundamental elements for controlling the operation of the robot will be explained.

In the figure, a motion data calculation section 17 calculates the magnitude of movement of the lift device 4 and the magnitude of angular movement of the first and second arms 5 and 6 according to the position data representing the set position at the end of the automatic screw fixing device 7 shown in Fig. 1 which is read from a memory 19 when a gate circuit 18 is opened in response to a gate signal $G_1$, described later, and the instantaneous position data of the lift device 4 and the first and second arms 5, 6 stored in a current position register 25. Subsequently, the calculated result is output to the pulse distributor 20.

The memory 19 stores a plurality of position data representing the position of each hole 12a of the glove box lid 12 in Fig. 1 obtained by way of an illustrative dry-run and data representing the initial position of the robot. The stored data is read out from the memory according to predetermined operation procedure.

Although it is unlikely to be able to consistently position the end of the automatic screw fixing device 7 of the robot 1 exactly over each of holes 12a of the individually differing glove box lids 12, it is possible to position the end at least in the region around the holes.

The pulse distributor 20 generates a pulse signal which represents the moved distance (angle) of each position by a pulse count according to the calculated results of the motion data calculation section 17 and distributes an appropriate pulse signal to the deviation counter 21 of each digital DC servo system.

The digital DC servo system is so designed as to control rotational drive of the motor $M_1$ through a D/A converter and a servo amplifier in the driving unit 22 in accordance with the counter output of the deviation counter 21. The speed and position (magnitude of rotation) control of the system is conducted as follows.

In order to rotate the motor $M_1$ in the proper direction, the pulse signal from the pulse distributor 20 is input to the up-count terminal U of the deviation counter 21 and the pulse signal fed-back from a pulse generator $PG_1$ actuated by the motor $M_1$ is input to the down-count terminal D of the deviation counter 21 through a switching circuit (not shown).

According to this arrangement, the counter value of the deviation counter 21 increases at a rate depending on the period of the pulse signal and the output characteristics of the pulse generator $PG_1$ until the motor $M_1$ has continuously rotated for a predetermined period, and the counted value of the deviation counter 21 is held at a constant value after the predetermined period.

When the pulse signal input to the up-count terminal U of the deviation counter 21 stops, the counter value begins to decrease in response to the pulse signal from the pulse generator $PG_1$.

The driving unit 22 is feed-back controlled so as to compare and match the actual speed value (derived by F/V

- 14 -

converting the pulse signal from the pulse generator $PG_1$) from the speed detecting unit 23 to the counter value of the deviation counter 21 serving as a speed reference value.

As described above, the motor $M_1$ starts to rotate as the deviation counter 21 starts to count the pulses from the pulse distributor 20. The motor $M_1$ rotates through a number of cycles determined by the number of pulses and then stops; this is reflected in the counter value of the deviation counter 21 first increases, then remains constant for a while and finally decreases to zero. In this manner, the position (magnitude of rotation) control is carried out. If the rotational magnitude of the motor $M_1$ is less than or greater than the predetermined value, the following compensation will be performed.

When an increment-type pulse generator $PG_1$ is used, the direction of rotation of the motor $M_1$ can be detected by discriminating the phase of the pulse signal output from the generator.

Thus, the above-mentioned switching circuit is designed to perform a discriminating function by which the pulse signal from the pulse generator $PG_1$ is conducted to the down-count terminal D of the deviation counter 21 as disclosed above when the motor $M_1$ is rotated in the regular direction, or alternatively to the up-count termial U when the motor $M_1$ is rotated in the reverse direction.

In this manner, when the rotational magnitude has not reached the predetermined value, the counter value of the deviation counter 21 is, of course, not zero so that the motor $M_1$ is further rotated in the regular direction until the counter value is zero. On the other hand, after the rotational magnitude exceeds the predetermined value, the counter value of the deviation counter 21 is a negative value so that the motor $M_1$ is rotated in the reverse direction and simultaneously the pulse generator $PG_1$ outputs a pulse signal according to the rotation so that the negative counter value is increased to a positive value according to the pulse signal in order to make the counter value zero.

Accordingly, as a result, the motor $M_1$ rotates for a number of cycles corresponding to the number of pulses of the pulse signal from the pulse distributor 20 and then stops.

The current position register 25 stores the counter outputs from three position counters 24 which each count apparent rotational magnitude (regular rotational magnitude - reverse rotational magnitude) from the initial positions of motors $M_1$ to $M_3$ driven and controlled in the above manner, and thus holds the current coordinates of each part of the robot reflecting the distance travelled by each from its respective original position.

The input side of each of the position counters 24 is connected to a switching circuit, which detects the phase of the pulse signal from each of the

- 16 -

pulse generators $PG_1$ to $PG_3$ and outputs the pulse signal to the up-count terminal while the motors $M_1$ to $M_3$ are rotating in the regular direction or to the down-count terminal during rotation in the opposite direction.

According to the above manner, the end of the automatic screw tightening device 7 attached to the wrist 8 of the robot 1 of Fig. 1 can be located in the vicinity of (or exactly above) the hole 12a formed in the glove box lid 12 temporarily fixed to the glove box 11 of the instrument panel 10 on the conveyer 9.

The elements or means according to the present invention will be explained below.

In Fig. 7, a detecting circuit 26 comprises four detecting circuit sections as shown in Fig. 4 and outputs the above output signals $P_1$ to $P_4$ according to the detected results from the detecting elements $Q_1$ to $Q_4$.

A discriminating circuit 27 receives as inputs the output signals $P_1$ to $P_4$ as binary data from the detecting circuit 26 through a gate circuit 28 which is opened by a gate signal $G_2$ described later. Thus, the circuit 27 outputs signals $S_0$ to $S_{13}$ according to the conditions shown in Table 1.

In Table 1, "$Q_1$ to $Q_4$-OFF" represents the state in which none of the detecting elements $Q_1$ to $Q_4$ detect the presence of the hole 12a. "$Q_1$-ON" represents that only the detecting element $Q_1$ detects the presence of the hole 12a.

Table 1

| Detected Contents | | $P_4\ P_3\ P_2\ P_1$ | Output Signal |
|---|---|---|---|
| $Q_1$ to $Q_4$ | OFF | 0 0 0 0 | $S_0$ |
| $Q_1$ | ON | 0 0 0 1 | $S_1$ |
| $Q_2$ | ON | 0 0 1 0 | $S_2$ |
| $Q_1, Q_2$ | ON | 0 0 1 1 | $S_3$ |
| $Q_3$ | ON | 0 1 0 0 | $S_4$ |
| $Q_2, Q_3$ | ON | 0 1 1 0 | $S_5$ |
| $Q_1$ to $Q_3$ | ON | 0 1 1 1 | $S_6$ |
| $Q_4$ | ON | 1 0 0 0 | $S_7$ |
| $Q_1, Q_4$ | ON | 1 0 0 1 | $S_8$ |
| $Q_1, Q_2, Q_4$ | ON | 1 0 1 1 | $S_9$ |
| $Q_3, Q_4$ | ON | 1 1 0 0 | $S_{10}$ |
| $Q_1, Q_3, Q_4$ | ON | 1 1 0 1 | $S_{11}$ |
| $Q_2$ to $Q_4$ | ON | 1 1 1 0 | $S_{12}$ |
| $Q_1$ to $Q_4$ | ON | 1 1 1 1 | $S_{13}$ |

There are no conditions "$Q_1, Q_3$ – ON" or "$Q_2, Q_4$ – ON" in Table 1 since it is impossible for only two diagonally aligned detecting elements among the four elements $Q_1$ to $Q_4$ to detect the presence of holes 12a as should be clear from Fig. 6.

This discriminating circuit 27 operating in the above manner can be easily configured in a well-known manner by employing a binary-to-hexidecimal notation

convertion circuit, for example.

A control unit 29 has general control of the robot employing the control method according to the present invention.

The control unit 29 outputs a gate signal $G_1$ to the gate circuit 18 whenever the unit 29 receives an actuation starting command signal $S_T$ for the robot. The gate circuit 18 is opened so that the position data indicating the first destination is output from the memory 19 to the motion data calculating section 17.

According to the position data, the motion data calculating section 17 calculates the motion data of each part of the robot 1 in response to the trailing edge of the gate signal $G_1$ and then, outputs the calculated result to the pulse distributor 20.

The pulse distributor 20 distributes pulse signals in accordance with the calculated results to the deviation counter 21 in each of the digital DC servo systems.

Accordingly, positioning control is performed by actuation of the digital DC servo system in response to the input pulse signal so that the end of the automatic screw tightening tool 7 attached to the wrist 8 of the robot 1 is positioned at the destination in the vicinity of the first hole 12a in the glove box lid 12.

In the above explanation, the robot 1 is moved directly toward the first destination from the initial position. However, in actual practice, a plurality of intermediary points are provided therebetween so as to define a locus of movement of the robot 1.

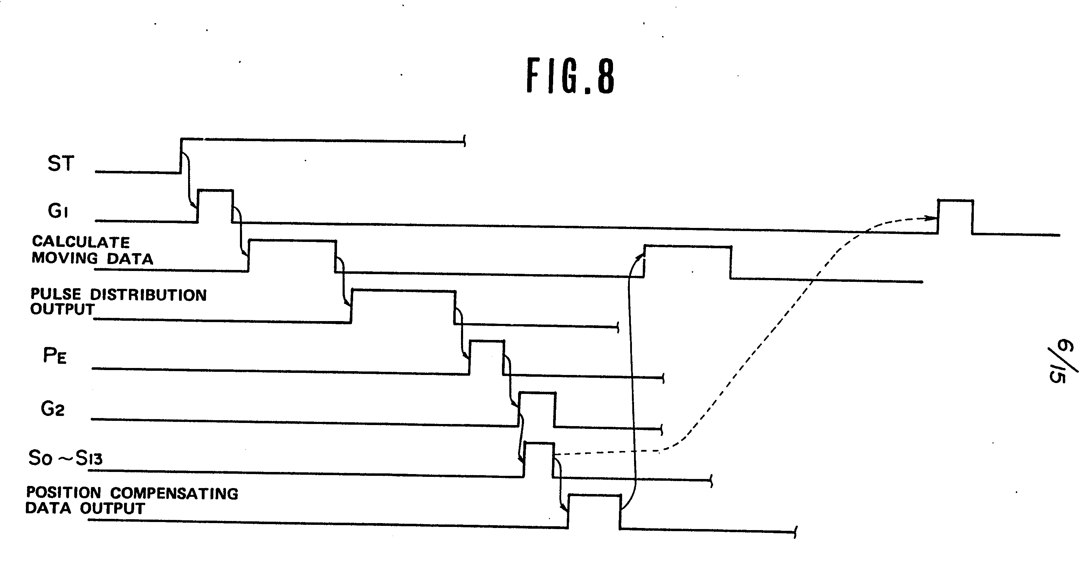

The pulse distributor 20 outputs a distribution-ending signal $P_E$ shown in Fig. 8, to the control unit 29 whenever the pulse distributor 20 has finished distributing the pulse signal.

According to the distribution ending-signal $P_E$, the control unit 29 outputs a gate signal $G_2$ shown in Fig. 8, to the gate circuit 28 to open the gate circuit 28.

While the gate circuit 28 is open, the detecting circuit 26 output signals $P_1$ to $P_4$ are output to the discriminating circuit 27 by the detecting circuit 26 according to the detected state of the holes by the detecting elements $Q_1$ to $Q_4$ in the end of the automatic screw tightening tool. The foregoing discrimination is conducted so that any one of signals $S_0$ to $S_{13}$ is input to the control unit 29.

When the input signal is $S_0$ which represents that none of the detecting elements $Q_1$ to $Q_4$ detect a hole 12a in the glove box lid 12, the control unit 29 judges that position compensation cannot be performed and produces an abnormality signal NG to handle the abnormal state, for example, to stop the operation of the robot 1.

On the other hand, when the input signal is any one of $S_1$ to $S_{12}$, the control unit 29 outputs one of the selecting signals $T_1$ to $T_{12}$ corresponding to the input signal to a selective read-out circuit 30.

The selective read-out circuit 30 selects one of the registers RST 1 to RST 12 in which position compensating data indicating the direction and amount of movement of the end of the automatic screw tightening tool 7 are stored, according to the selecting signals $T_1$ to $T_{12}$, and reads out and outputs the position compensating data from the register selected to the motion data calculating section 17 at the timing shown in Fig. 8.

The relationship between contents of the position compensating data to be stored in the registers RST 1 to RST 12 and the selecting signal $T_1$ to $T_{12}$ is set, for example as shown in Table 2.

Table 2

| Selecting Signal | Register | Contents of Position Compensating Data |
|---|---|---|
| $T_1$ | RST 1 | Data for moving through distance $\ell_1$ in $Q_1$-direction |
| $T_2$ | RST 2 | Data for moving through distance $\ell_1$ in $Q_2$-direction |
| $T_3$ | RST 3 | Data for moving through distance $\ell_2$ in the direction of the midpoint between $Q_1$ and $Q_2$ |
| $T_4$ | RST 4 | Data for moving through distance $\ell_1$ in $Q_3$-direction |
| $T_5$ | RST 5 | Data for moving through distance $\ell_2$ in the direction of the midpoint between $Q_2$ and $Q_3$ |
| $T_6$ | RST 6 | Data for moving through distance $\ell_3$ in $Q_2$-direction |
| $T_7$ | RST 7 | Data for moving through distance $\ell_1$ in $Q_4$-direction |
| $T_8$ | RST 8 | Data for moving through distance $\ell_2$ in the direction of the midpoint between $Q_1$ and $Q_4$ |
| $T_9$ | RST 9 | Data for moving through distance $\ell_3$ in $Q_1$-direction |
| $T_{10}$ | RST 10 | Data for moving through distance $\ell_2$ in the direction of the midpoint between $Q_3$ and $Q_4$ |
| T11 | RST 11 | Data for moving through distance $\ell_3$ in $Q_4$-direction |
| $T_{12}$ | RST 12 | Data for moving through distance $\ell_3$ in $Q_3$-direction |

$\ell_1 = d_1$ (diameter of the end surfaces 15a of the chuck claws 15, 15) $- d_3$ (diameter of relief hole).

$\ell_2 = \dfrac{d_2}{2}$ (diameter of the hole 12a) $- d_3$ (diameter of relief hole).

$\ell_3 = d_3$ (diameter of relief hole).

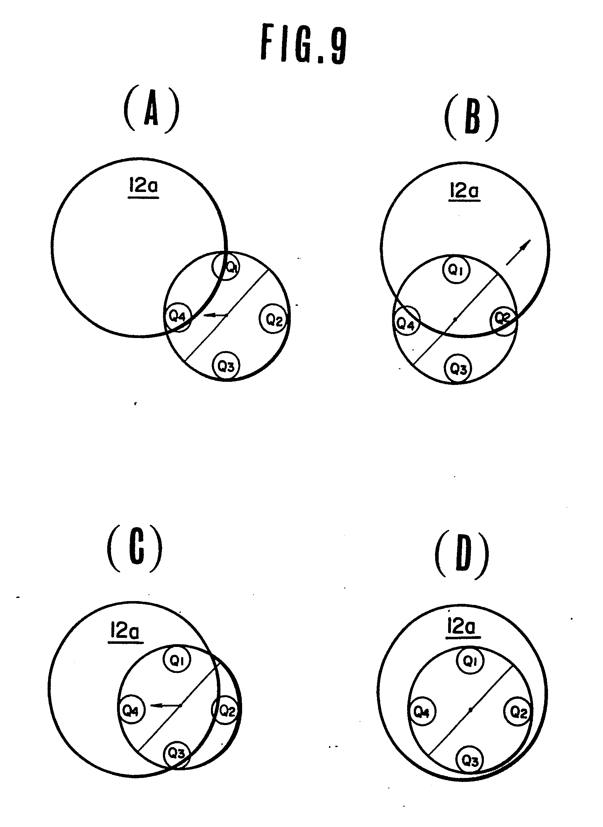

The automatic screw tightening tool 7 should be moved through distance $\ell_3$ toward the detecting element $Q_4$ (in the arrow direction) from the position shown in Fig. 9(C) in order for the hole 12a of be detected by all of the detecting elements $Q_1$ to $Q_4$ as shown in Fig. 9(D).

Consequently, according to the settings shown in Table 2 if any one of the four detecting elements $Q_1$ to $Q_4$ detects the presence of a hole 12a, the position compensating operation is repeated three times so that all of the detecting elements $Q_1$ to $Q_4$ can detect the hole 12a as shown in Fig. 9(D). If two of the detecting elements $Q_1$ to $Q_4$ detect the presence of the hole 12a, the position compensating operation will be repeated twice so as to achieve the state shown in Fig. 9(D). Finally, if three of the detecting elements $Q_1$ to $Q_4$ detect the presence of the hole 12a, the position compensating operation will be performed once so as to achieve the state shown in Fig. 9(D).

Returning to Fig. 7, when the signal conducted from the discriminating circuit 27 to the control unit 29 is $S_{13}$, the control unit 29 outputs the gate signal $G_1$ shown in Fig. 8 to the gate circuit 18 again in order to open the gate circuit 18. The position data for executing the screw fixing operation is read from the memory 19 and output to the data calculating section 17.

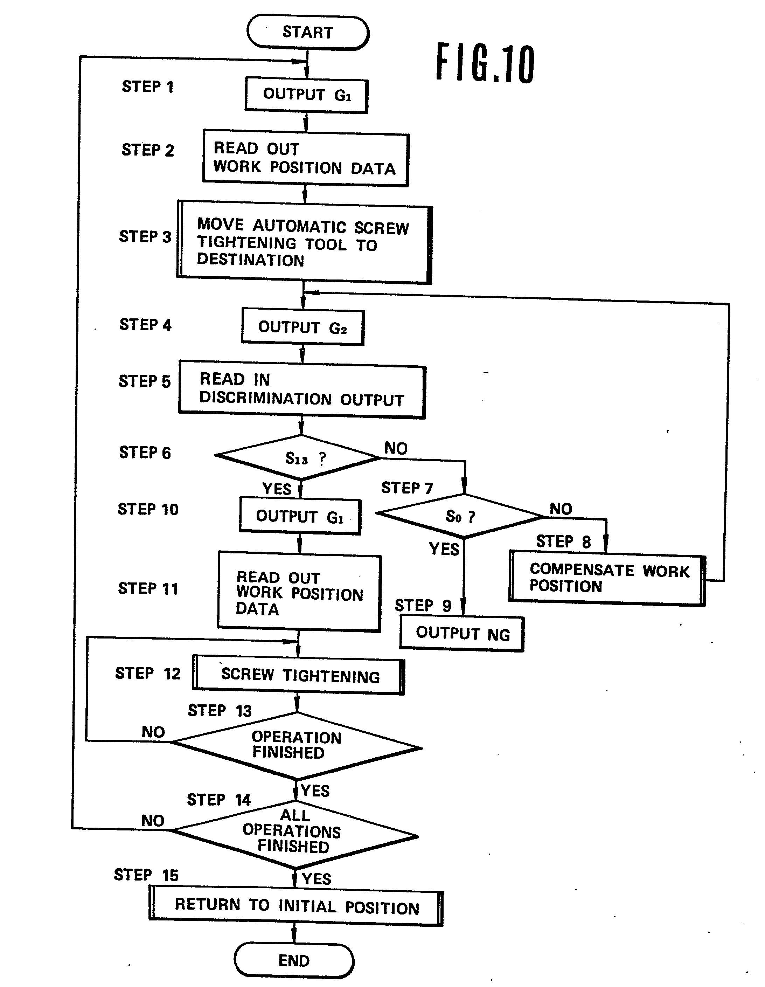

With the foregoing arrangement, the control operation performed by the control unit 29 will be

- 23 -

described with reference to the flowchart of Fig. 10.

At first, an operation device (not shown) is manually operated to input a start signal $S_T$ to the control unit 29. As a result, the control unit 29 executes the control program of Fig. 10. During execution of the control program, the gate signal $G_1$ is fed to the gate circuit 18 from the control unit 29 to open the gate, at STEP 1. Then, work position data stored in the memory 312 are transferred to the motion data calculating section 17. The motion data calculating section 17 delivers motion data based on the work position data transferred from the memory 19 via the gate 18 and the current position data input from current position register 25. The motion data is fed to a pulse distributor 20 to drive each digital servo system, at STEP 2. At STEP 3, the automatic screw tightening tool is move to its work position.

Then, the control unit 29 outputs the gate signal $G_2$ to open the gate so that detector outputs $P_1$ to $P_4$ of the detector elements $Q_1$ to $Q_4$ can be input to the discrimination circuit 27. The discrimination circuit 27 produces discriminator outputs $S_0$ to $S_{13}$ in accordance with the detector outputs $P_1$ to $P_4$, at STEP 4. At STEP 5, the control unit 29 read in the discriminator output. At STEP 6, the discriminator output is checked to determine whether or not it is $S_{13}$.

If the result of the check at the STEP 5 is YES, i.e., the discriminator output is $S_{13}$, the control unit 29

- 24 -

outputs the gate signal $G_1$ to open the gate circuit 18, at STEP 10. Thus, the work position data in the memory 19 is transferred to the motion calculating section 17. The motion data calculating section 17 calculates the motion data based on work position data from the memory 19 and current position data from the current position register 25. The pulse distributor 20 actuates each of the digital servo systems on the basis of the motion data and operates the automatic screw tightening tool 7 to perform the screw tightening operation at STEP 12. After this, at STEP 13, completion of screw tightening operation is confirmed. If the screw tightening is not completed, program execution goes back to the STEP 12 to continue the screw tightening operation.

On the other hand, when the result of checking at the STEP 6 is NO, the discriminator output of the discrimination circuit 27 is checked at STEP 7 to see whether or not it is $S_0$. When the discriminator output is $S_0$, the judgment at the STEP 7 is "YES" whereby a NG signal is produced at STEP 9 at the same time to stop the robot operation. On the other hand, if the judgment at the STEP 7 is NO, selector signal $T_1$ to $T_{12}$ corresponding to the discriminator outputs $S_1$ to $S_{12}$ of the discriminator circuit 27 is output at STEP 8, from the control unit 29. Accordingly, one of registers $RST_1$ to $RST_{12}$ corresponding to the selector signal $T_2$ to $T_{12}$ is accessed through the selective read-out circuit 30. The content of the accessed

register $RST_1$ to $RST_{12}$ is transferred to the motion data calculating section 17 through the selective read-out circuit 30 as position compensating data. The motion data calculating section 17, the pulse distributor 20 and digital servo systems in the robot elements are operated according to the position compensating data to adjust the position of the end portion of the automatic screw tightening tool 7.

The sequence of looped steps STEP 4 through STEP 8 are repeated until all of the detecting elements $Q_1$ to $Q_4$ detect the presence of the hole 12a. When all of the detecting elements $Q_1$ to $Q_4$ detect hole 12a, program execution exits from the loop to the STEP 10.

At STEP 13, the screw tightening operation is checked to see if it is completed and when completion is confirmed, program execution goes to the STEP 14 to check if all of the screws are engaged to respectively corresponding holes 12a of the glove box lid 12. If some of the screws are not yet tightened, control returns to STEP 1 to repeat the foregoing operation. Upon completion of tightening of all the screws, control passes to STEP 15.

It should be appreciated that for the second cycle of robot operation, the destination will be read from the memory 19 according to the holes 12a of the glove box lid 12.

At the STEP 15, the robot is returned to an initial position and held in the stand-by condition until the next operation, as the robot operation required to fix the glove box lid 12 to the glove box on the stopped conveyor 9 is finished.

In Fig. 7, the discriminating circuit 27, the control unit 29, the selectively reading out circuit 30, and the registers RST 1 to RST 12 constitute a position compensating amount determining means. On the other hand, the movement data arithmetic unit 17, the pulse distributor 20, the present position register 25, and each of the digital DC servo systems constitute a position compensating control means.

Modifications to the above-described embodiment may be as follows.

(A) Even if the diameter of each of the relief holes $15b_1$ to $15b_4$ shown in Fig. 3 is the same as that of the light receiving end face 16a of the optical fiber 16, this modification can result in substantially the same detecting effect.

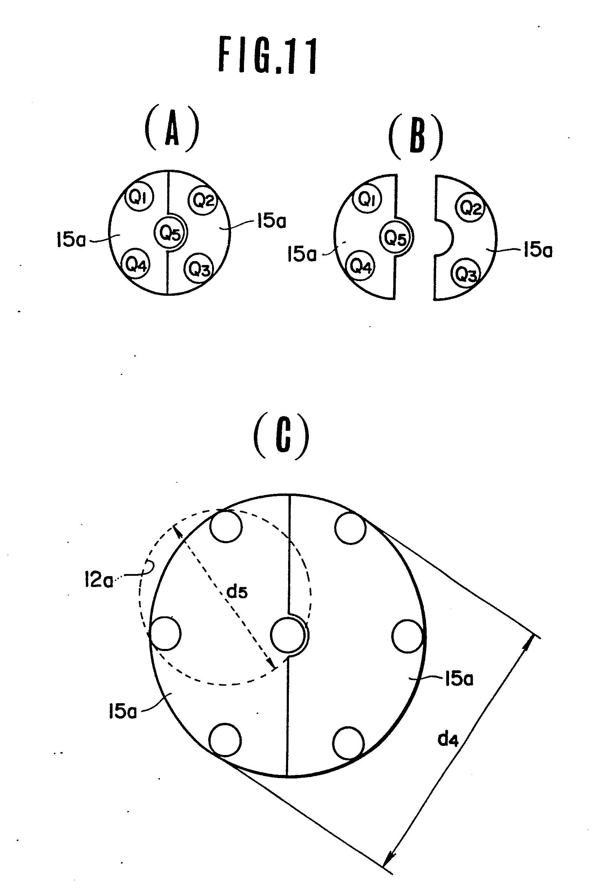

(B) As shown in Fig. 11(A), an additional detecting element $Q_5$ may be provided centered among the four detecting elements $Q_1$ to $Q_4$ and the screw tightening operation may be started when the additional detecting element $Q_5$ detects the presence of the hole 12a.

Even through the modification set forth above has poorer accuracy than the above embodiment, the center of the end of the automatic screw tightening tool 7 is positioned above the hole 12a so that screw tightening operation can be performed. According to this arrangement, the ends 15a, 15a of the chuck claws 15, 15 are opened as shown in Fig. 11(B).

(ハ) The number of the detecting elements should be at least two; for example, seven detecting elements as shown in Fig. 11(C), can be used in this invention.

In this case, the diameter $d_4$ of the end faces 15a, 15a is a little less than twice of the diameter $d_5$ of the hole 12a, and three elements neighbouring each other in the seven elements are so arranged as to be internally tangent to the hole 12a. When any one of the detecting elements detects the presence of the hole 12a, the end of the tightening tool is moved towards the element which detects the hole 12a by the distance $\ell_4 = d_4/2 - d_3/2$. ($D_3$; diameter of the detecting element). When two of the detecting elements detect the presence of the hole 12a, the end of the tightening tool is moved towards the midpoint of the two detecting elements by the distance $\ell_4$. According to this movement, the detecting element can always detect the presence of the hole 12a, thereby performing the tightening operation without error.

(ニ) In the above embodiment, the automatic screw tightening tool 7 is attached to the wrist 8 of the robot 1. However, a mechanical hand may be attached to the wrist 8 and the automatic screw tightening tool 7 may be gripped by the mechanical hand.

(ホ) In the above embodiment, the present

- 28 -

invention is applied to the step of fixing the glove box lid to the instrument panel for automotive vehicle. However, the present invention can be also applied to other components (such as meters) in the instrument panel or to other fixing steps for other workpieces.

Furthermore, for fastening operations such as securing a nut to a stud bolt, the same effect can be obtained by arranging a plurality of detecting elements to a nut runner in the same manner as in the above embodiment.

In order to insert a pin or the like by means of a mechanical hand attached to the wrist 8 of the robot, a plurality of detecting elements may be provided in the mechanical hand so as to ·detect the difference between the position of the mechanical hand and that of the hole into which the pin is inserted, thereby correcting its position.

(∾) Although the above embodiment of the present invention is applied to a horizontal multi-joint-type robot with three shafts, it is not only limited to this case, but may also be applied to any shaft-equipped robot.

As given above, according to the present invention the discrepancy between the position of the working end of the robot and that of working spot such as a threaded hole can be corrected by a relatively simple device and at a higher speed than with conventional visual recognition devices, thereby resulting in many benefits for arranging the robot on the assembly line.

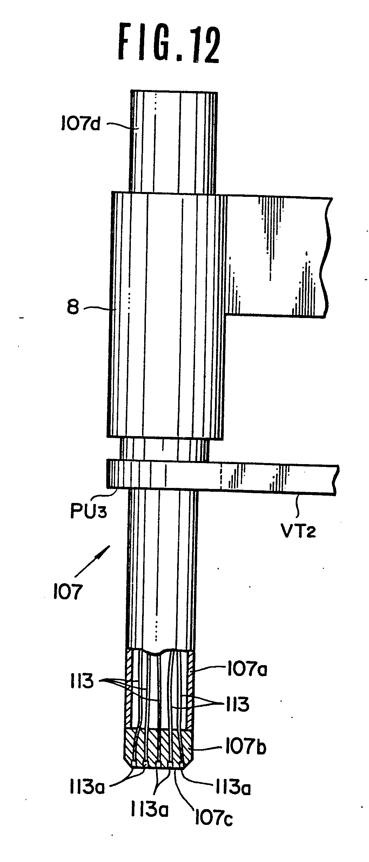

Figs. 12 to 20 show the second embodiment according to the present invention, in which the automatic screw tightening tool is replaced with a sensor.

In Fig. 12, a head member 107b serving as a detecting member is fixed to the top of a cylindrical member 107a constituting the sensor body 107. The tip surface 107c of the head member 7b is provided with the light-receiving ends 113a of nineteen optical fibers 113 (Fig. 2 shows only five fibers) molded into the head member 7b, distributed as shown in Fig. 3.

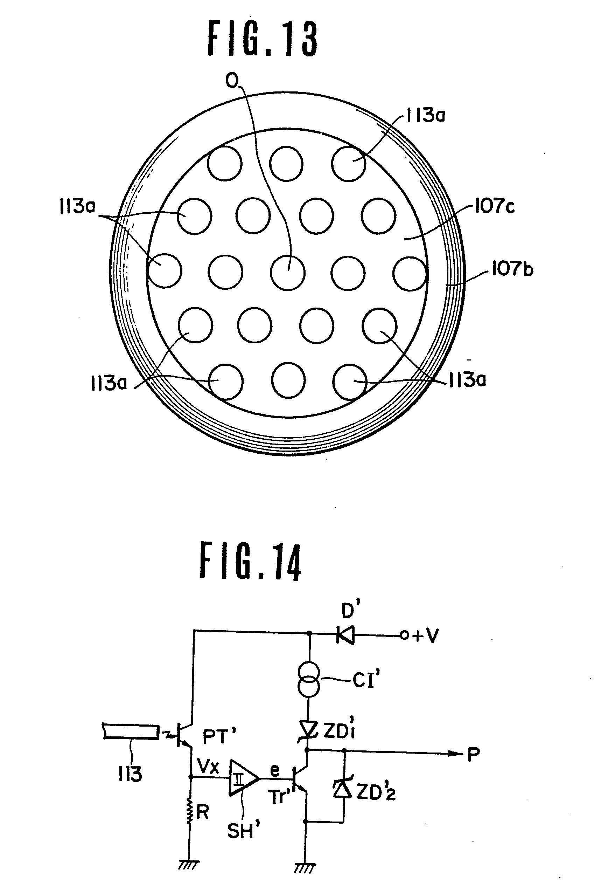

The center of the top surface 107c of the head member 107b is represented by "0". These nine-teen optical fibers 113 lead through the inside of the cylindrical member 107a to a detecting unit disposed in the upper end 107d of the sensor body 107 as shown in Fig. 2. The detecting unit comprises nineteen circuits constituted as shown in Fig. 14. This circuit operates in such a manner that the light transmitted through the optical fiber 113 is supplied to a photo-transistor PT, which generates an electric current corresponding to the intensity of the light and transmits the current to a resistor R. The voltage Vx generated across this resistor R is transmitted to a C-MOS Schmitt-trigger buffer SH. The buffer circuit is so rated that the output $e$ of the buffer SH is "H" when the voltage Vx is higher than the input threshold level$V_{TH}$ or "L" when the Vx is lower than $V_{TH}$.

For example, assuming that there is a dimensional

- 30 -

relationship as shown in Fig. 5 among the diameter $d_1$ of the light-receiving end 113a of the optical fiber 113, the diameter $d_2$ of the hole 112a formed in the glove box 112, and the distance $d_3$ between the centers of the light-receiving ends 13a, the output $e$ is so designed that the output "L" is generated when at least two-thirds of the area of the light-receiving surface 113a overlaps the hole 112a, and that the output "H" is always generated except for the above case.

The hole 12a in the glove box lid 12 is darker than the remaining areas.

According to this arrangement, when the output $e$ of the Schmitt-trigger buffer SH is "L", an output transistor Tr remains turned off so that an output P is "1" according to a constant electric current source CI, and when the output $e$ is "H", the output transistor Tr is turned on so that the output P changes to "0".

In the circuit, a diode D is adapted to prevent a reverse connection, a Zener diode $ZD_1$ is adapted to prevent back current, and another Zener diode $ZD_2$ is adapted to absorb surges.

As a result, it is possible to know whether the light-receiving end 113a of the optical fiber 113 serving as the detecting part detects the existence of the hole 12a or not by determining whether the value of output P is "1" or "0".

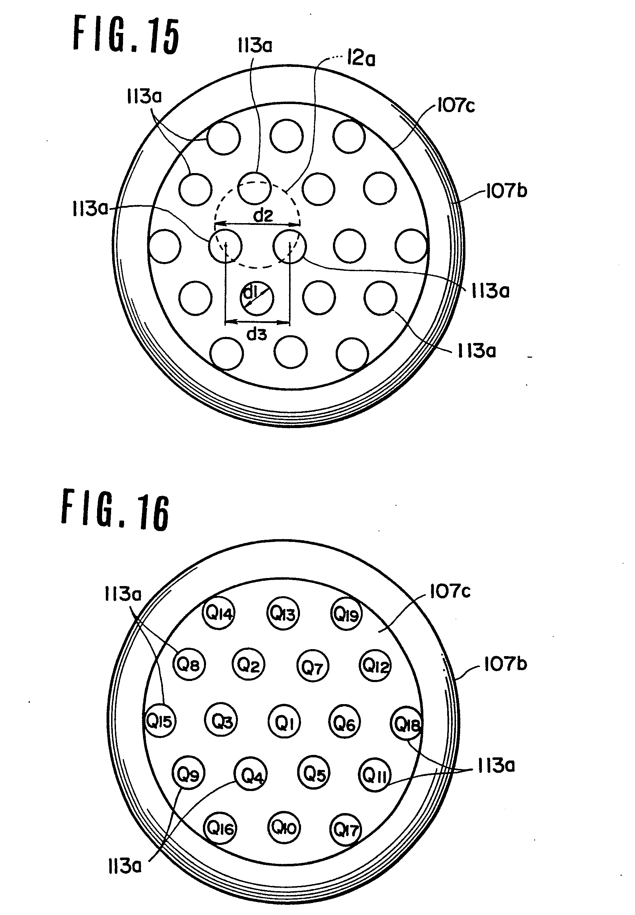

As shown in Fig. 16 the nineteen light-receiving ends 113a will hereafter be represented by $Q_1$ to $Q_{19}$ and the outputs from the detecting circuits shown in Fig. 14 corresponding thereto will be represented by $P_1$ to $P_{19}$ respectively.

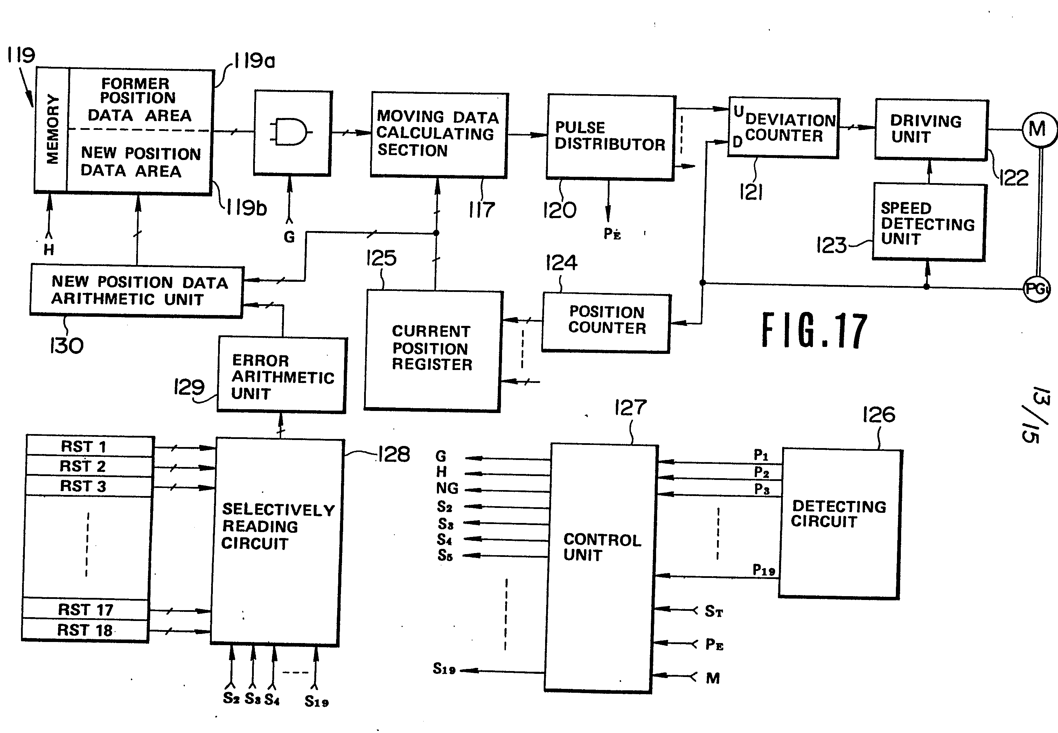

Fig. 17 is a control block diagram for the horizontal multi-joint-type robot 1 in Fig. 1 containing the position difference error detecting device for the robot according to the present invention.

In Fig. 17, a pulse distributor 120 and the subsequent components, specifically a deviation counter 21, a driving unit 122, a speed detecting unit 123, and a position counter 124, constitute a digital DC servo system for the motor $M_1$ which drives the lift member 4 shown in Fig. 1. Since the other digital DC servo systems for the first and second arms 5, 6 are constituted in the same manner as the above, the other systems will not be illustrated.

First of all, fundamental elements for controlling the robot drives will be explained.

In the figure, a motion data calculating section 117 caluculates the motion distance of the lift device 4 and the angle of movement of the first and second arms 5 and 6 according to the position data representing the destination at the end of the sensor body 107 in Fig. 1 (corresponding to the end of the automatic screw fixing device when the device is attached to the wrist 8 of the robot 1) which is read from a former position data area

0109447

119a of a memory 119 when a gate circuit 118 is turned off in response to a gate signal G, described later, and the present position data of the lift device 4 and the first and second arms 5, 6 stored in a current position register 125. Subsequently, the calculated result is output to the pulse distributor 120.

The former position data area 119a of the memory 119 stores a plurality of position data representing the position of each hole 12a of the glove box lid 12 belonging to the former lot derived, for example, by an illustrative dry-run, a plurality of intermediary position data for determining the locus of motion from the starting point of the robot to the hole 12a which is the first working position, the locus of motion between each hole 12a, and the locus of motion from the last working hole 12a to the starting point, and a working position data for moving the lift member 4 downwards so as to start the fastening operation (the working position data is not read while a position discrepancy is detected). The stored data is read from the memory according to predetermined operation procedure.

The pulse distributor 120 generates a pulse signal which represents the distance (angle) moved from each position in terms of a number of pulses according to the calculated result from the motion data calculating section 117 and distributes pulse signals to each of the deviation counters 21 of each digital DC servo system.

- 33 -

The digital DC servo system is so designed that the rotating drive of the motor $M_1$ is controlled by means of a D/A converter and a servo amplifier in the driving unit 122 in accordance with the counted output from the deviation counter 121. The speed and position (rotation amount) control of the system is conducted as follows.

In order to rotate the motor $M_1$ in the regular direction, the pulse signal from the pulse distributor 120 is conducted to an up-count terminal U of the deviation counter 121 and the pulse signal fed-back from a pulse generator $PG_1$ which is actuated by the motor $M_1$ is conducted to a down-count terminal D of the deviation counter 121 through a switching circuit, not shown, respectively. According to this arrangement, the counted value of the deviation counter 121 is increased at the speed depending on the period of the pulse signal and the output characteristics of the pulse generator $PG_1$ until the motor $M_1$ has continuously rotated for a predetermined period from the point of time when the motor $M_1$ begins to rotate, and the counted value of the deviation counter 121 is held at a constant value after the predetermined period.

When the up-count terminal U of the deviation counter 121 does not receive the pulse signal, on the other hand, the counted value begins to decrease in response to the pulse signal from the pulse generator $PG_1$. The driving unit 122 is so controlled in a feed-back manner as to compare and match the actual speed value (derived by F/V

- 34 -

converting the pulse signal from the pulse generator $PG_1$) from the speed detecting unit 123 and the counted value from the deviation counter 121 serving as a speed reference value. In the manner above, the motor $M_1$ begins to rotate as the deviation counter 121 begins to count the pulse signal from the pulse distributor 120. The motor $M_1$ first rotates at a rate in proportion to the pulse value and then stops which is reflected in the counted value of the deviation counter 121 which first increases, remains constantfor a while and finally decreases to zero. According to this, the position (rotation amount) control is carried out. If the rotation count of the motor $M_1$ is higher or lower than the predetermined value, the following compensation will be performed.

That is, when an increment-type pulse generator $PG_1$ is used, the rotating direction of the motor $M_1$ can be detected by discriminating the phase of the pulse signal output from the generator.

Thus, the above-mentioned switching circuit is designed to perform a discriminating function by which the pulse signal from the pulse generator $PG_1$ is outputted to the down-count terminal D of the deviation counter 121 as disclosed above when the motor $M_1$ is rotated in the regular direction, or alternatively to the up-count terminal U when the motor $M_1$ is rotated in the reverse direction.

In this manner, if the rotation count has not reached the predetermined value, the counted value of the

deviation counter 121 is of course not zero so that the motor $M_1$ is further rotated in the regular direction until the counted value is zero. On the other hand, when the rotation count exceeds the predetermined value, the counted value of the deviation counter 121 is negative so that the motor $M_1$ is rotated in the reverse direction and simultaneously the pulse generator $PG_1$ outputs the pulse signal according to the rotation so that the negative counted value is increased toward positive values according to the pulse signal until the counted value is zero. Accordingly, as a result, the motor $M_1$ rotates through a number of rotations in accordance with the pulse count of the pulse signal from the pulse distributor 20 and then stops.

A current position register 125 is loaded with the counted outputs from three position counters 124 which respectively count the apparent rotated amounts (regular rotation - reverse rotation) from starting the motors $M_1$ to $M_3$ driven and controlled in the above manner and thus holds the present position data representing the distance moved by each part of the robot from their respective original positions.

The input sides of these position counters 124 are each provided with switching circuits, which detect the phase of the pulse signals from the pulse generators $PG_1$ to $PG_3$ and supply the regular rotation pulse signal for the motors $M_1$ to $M_3$ to the up-count terminal or the reverse rotation pulse signal to the down-count terminal.

According to the above manner, the end of the sensor body 107 attached to the wrist 8 of the robot 1 shown in Fig. 1 can be located above and in the vicinity of the hole 12a formed in the glove box lid 12 temporarily fixed to the glove box 11 of the instrument panel 10 on the conveyer 9.

Other elements or means according to the present invention will be explained below.

In Fig. 17, a detecting circuit 126 is composed of nineteen circuits as shown in Fig. 4 and outputs the mentioned output signals $P_1$ to $P_4$ according to the detected results from the detecting elements $Q_1$ to $Q_{19}$.

A control unit 127 controls the general operation of the robot employing the control system according to the present invention.

That is, the control unit 127 outputs a fastening inhibit signal H to the memory 119 whenever the unit 127 receives a position data compensating mode signal M. In response to this signal, only the working position data stored in the former position data area 119a can be accessed.

The reason for this is that it is sufficient for the end of the sensor body 107 to be positioned above and in the vicinity of each hole 12a of the glove box lid 12 in order to detect the position difference error. All data will be read from the memory 119 in order after the position data compensating mode signal M is no longer received.

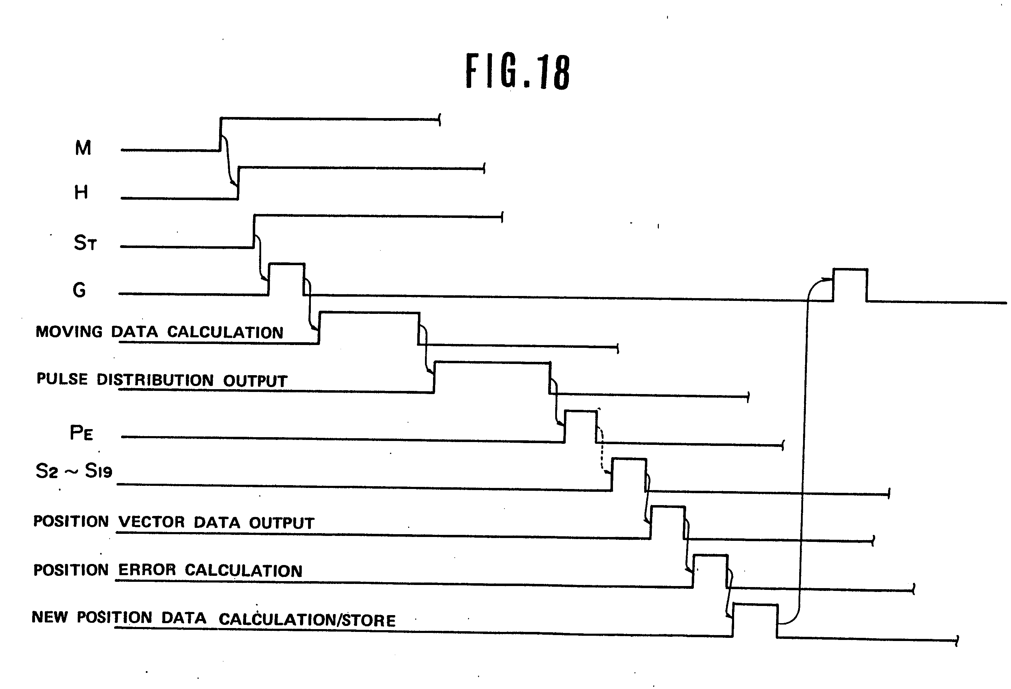

The control unit 127 outputs a gate signal G to the gate circuit 118 whenever the unit 127 receives an actuation start command signal $S_T$ for the robot, shown in Fig. 18. The gate circuit 118 is opened so that the position data indicating the first destination is transmitted from the former position data area 119a of the memory 119 to the moving data calculating section 117. According to the position data, the moving data calculating section 117 calculates the data for the amount of motion of each part of the robot 1 in response to the falling-edge timing of the gate signal G and then outputs the calculated result to the pulse distributor 120.

According to the calculated result, the pulse distributor 120 distributes pulse signals to the deviation counters 121 of each digital DC servo system.

Accordingly, the positioning control is performed by actuation of the digital DC servo system in response to the input pulse signal so that the end of the sensor body 7 attached to the wrist 8 of the robot 1 is located at the objective point above and in the vicinity of the first hole 12a in the glove box lid 12.

In the above explanation, the robot 1 is directly moved toward the first objective point from its original point. However, in an actual practice, the locus of motion of the robot 1 is limited according to the intermediary position data indicating a plurality of intermediary points provided therebetween.

The pulse distributor 120 outputs a distribution end signal $P_E$ whenever the distributor 120 has finished distributing the pulse signals. The control unit 127 receives this signal and introduces outputs $P_1$ to $P_{19}$ in response to the hole-detection state of the detecting units $Q_1$ to $Q_{19}$ from the detecting circuit 126 at the time of reception.

Then the control unit 127 discriminates whether each of the introduced outputs $P_1$ to $P_{19}$ is "1" or "0". When the outputs are all "0", which indicates that none of the detecting element $Q_1$ to $Q_{19}$ detects the hole 12a in the glove box lid, the control unit 127 judges that the position difference error can not be detected so that an abnormal signal NG is output in order to handle the abnormal state by stopping actuation of the robot 1.

On the other hand, when at least the output $P_1$ in the outputs $P_1$ to $P_{19}$ is "1", at least the detecting element $Q_1$ at the center of the tip surface 107c shown in Fig. 6 opposes the hole 12a. Thus, the control unit 27 judges that the position difference error is nil so that the gate signal G shown in Fig. 18 is output to the gate circuit 118. According to this signal, the gate circuit 118 is opened so that the position data indicating the next objective point is read from the former data area 119a of the memory 119.

Furthermore, when one to three of the outputs $P_2$ to $P_{19}$ among the outputs $P_1$ to $P_{19}$, are "1", one to three of signals $S_2$ to $S_{19}$ indicating the kind of output "1" are output to a selective reading circuit 128 at the timing shown in Fig. 8.

The selective reading circuit 128 selects one of the registers $RST_1$ to $RST_{18}$ loaded with position vector data representing the distance between the center point O (refer to Fig. 13) of the end of the sensor body 107 and the center of each of the detecting elements $Q_2$ to $Q_{19}$, and the direction to the center of each of the detecting elements $Q_2$ to $Q_{19}$ from the center point O, according to one of the input signals $S_2$ to $S_{19}$. Then, it outputs the position vector data from the selected register to an error arithmetic unit 129.

The relationship between the contents of the position vector data stored in the registers $RST_1$ to $RST_{18}$ and the signals $S_2$ to $S_{19}$ is set, for example as shown in following table.

Table

| Signal | Register | Position Vector Data |
|--------|----------|---------------------|
| $s_2$ | $RST_1$ | $\vec{OQ}_2$ |
| $s_3$ | $RST_2$ | $\vec{OQ}_3$ |
| $s_4$ | $RST_3$ | $\vec{OQ}_4$ |
| $s_5$ | $RST_4$ | $\vec{OQ}_5$ |
| . | . | . |
| . | . | . |
| . | . | . |
| $s_{19}$ | $RST_{18}$ | $\vec{OQ}_{19}$ |

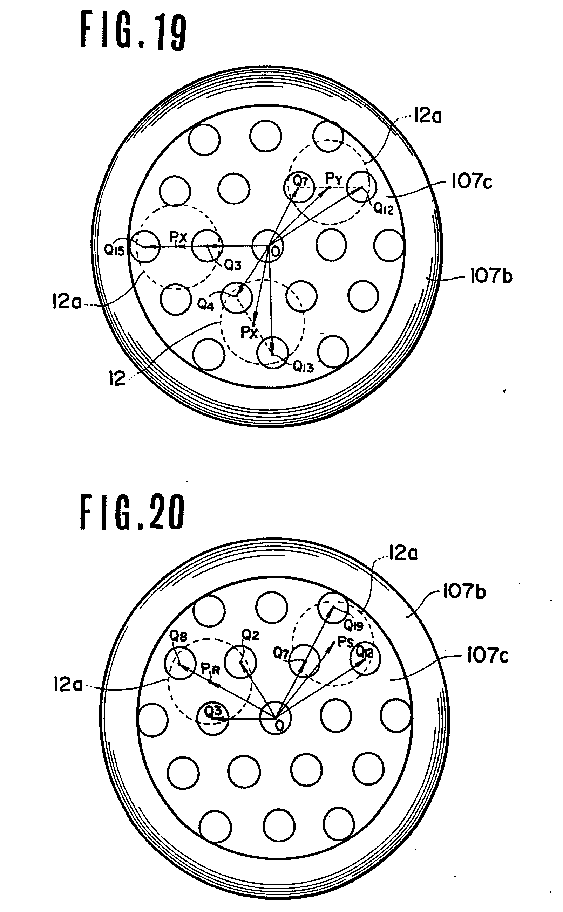

Wherein, $\vec{OQ}_n$ (n = 2 to 19) represents numerical data representing the position vector on the x - y plane shown in Fig. 19 defined by connecting the center point O of the end of the sensor body to the center of the detecting element Qn.

Since the dimensional relation among the diameter $d_1$ of the detecting elements $Q_1$ to $Q_{19}$, the diameter $d_2$ of the hole 12a, and the distance $d_3$ between the detecting elements is as shown in Fig. 5, one to three data can be read from the registers $RST_1$ to $RST_{18}$. The selecting and reading circuit 128 loads the position vector data into the buffer register of the error arithmetic unit 129 in a time series according to the number of the data.

The error arithmetic unit 129 performs the

- 41 -

following operation whenever the unit receives the position vector data from the selective read circuit 128 so as to derive the position difference error between the center point of the end of the sensor body 107 and the hole 12a. The derived result is output by the unit to a new position data arithmetic unit 130.

Specifically, when the unit receives one of the position vector data from the selective read circuit 128, the unit outputs the position vector data to the new position data arithmetic unit 130 directly. When the unit receives two of the position vector data, assuming that the two position vector data are represented by $\vec{OQ}_n$ and $\vec{OQ}_m$, it performs the operation $(\vec{OQ}_n + \vec{OQ}_m)/2$ and outputs the calculated result to the new position data arithmetic unit 130.

For example, referring to Fig. 19, when the position vector data input are represented by $\vec{OQ}_3$, $\vec{OQ}_{15}$, the operation formula is $\vec{OP}_x = (\vec{OQ}_3 + \vec{OQ}_{15})/2$; when the position vector data are $\vec{OQ}_7$, $\vec{OQ}_{12}$, the operation formula is $\vec{OP}_y = (\vec{OQ}_7 + \vec{OQ}_{12})/2$; or when the position vector data are $\vec{OQ}_4$, $\vec{OQ}_{10}$, the operation formula is $\vec{OP}_z = (\vec{OQ}_4 + \vec{OQ}_{10})/2$.

According to this operation, the position difference error between the center of the end of the sensor body 107 and the hole 12a can be obtained, as shown in the drawing.

Further, when the unit receives three of the position vector data, assuming that the three vector data

are represented by $\vec{OQ_n}$, $\vec{OQ_m}$ and $\vec{OQ_l}$, it performs the operation $(\vec{OQ_n} + \vec{OQ_m} + \vec{OQ_l})/3$, and outputs the calculated result to the new position data arithmetic unit 130. For example, referring to Fig. 20, when the position vector data input are represented by $\vec{OQ_2}$, $\vec{OQ_3}$, $\vec{OQ_8}$, the operation formula is $\vec{OP_R} = (\vec{OQ_2} + \vec{OQ_3} + \vec{OQ_8})/3$; when the position vector data are represented by $\vec{OQ_7}$, $\vec{OQ_{12}}$, $\vec{OQ_{19}}$, the operation formula is $\vec{OP_S} = (\vec{OQ_7} + \vec{OQ_{12}} + \vec{OQ_{19}})/3$.

According to these operations, as is clear from the drawing, the position difference error (including distance and direction) between the center of the end of the sensor body 107 and the hole 12a can be obtained.

Returning to Fig. 17, the new position data arithmetic unit 130 calculates the new position data of the first hole 12a of the glove box lid 12 belonging to the new lot according to the position vector data representing the position difference error output by the error arithmetic unit 129 and the present position data of the center of the end of the sensor body 107 from the present position register 125. The calculated result is stored in the new position data area 119b of the memory 119.

Furthermore, in order to calculate the new position data, assuming that the position vector data $\vec{OP}$ representing the position difference error is the position vector in a coordinate system, the origin of which is the center of the end of the sensor body 107, X and Y coordinate values of the present position data of the center of the end of the sensor body 7 are respectively added to coordinate values of the end of the position vector $\vec{OP}$.

The control unit 127 monitors the memory 119 and outputs the gate signal G to the gate circuit 118 whenever the control unit confirms that new position data has been loaded into the new position data area 119b. Then, the above-mentioned actuation is repeated.

When data changing operations for all of the former position data have been completed, the new position data in the new position data area 119b is transmitted to the former position data area 119a and then the system waits for a command signal to start the fastening operation.

The above embodiment may be modified as follows.

(イ) In the above embodiment, although the detecting elements $Q_1$ to $Q_{19}$ are disposed in the head member 107b of the sensor body 7, the present invention is not limited to this approach. For example, when an automatic screw tightening device 31 as shown in Fig. 11 is attached to the wrist 8 of the robot 1, the detecting elements may be disposed in the end of chuck claws 31a which move between their closed and opened positions, or when a mechanical hand, not shown, is attached to the wrist 8 of the robot 1, the detecting elements may be disposed in the end thereof.

(ロ) In the above embodiment, although the light

- 44 -

receiving ends 113a of the optical fibers 113 serving as the detecting elements $Q_1$ to $Q_{19}$ are distributed around the end surface 107c of the head member 107b, nineteen relief holes may be formed in the end surface 107c and the light receiving end 113a may be disposed at the bottom of the relief holes. This arrangement can improve detection accuracy since the detecting element would be less likely to receive extraneous light.

(ν) The number of the detecting elements is not limited to nineteen as shown in the above embodiment; more or fewer may be used in the present invention. But, if there are fewer elements, the detecting accuracy of the position difference error will be poorer.

On the other hand, the dimensional relationship between the diameter of the detecting elements $Q_1$ to $Q_{19}$ and that of the holes 12a, and the distance between each detecting elements is not constrained. It is preferable that the number of detecting elements capable of detecting the presence of the hole 12a at one time be small since the arithmetic operations will increase as the number increases.

(≤) In the above embodiment, the present invention is applied to workpieces such as holes formed in the glove box lid of the instrument panel for an automotive vehicle. However, the present invention can also be applied to other components (such as meters) in the instrument panel or other workpieces. Furthermore, in the above embodiment, although the position data changes as the lot changes, this system can be also applied to the state after overhaul of the robot or the conveyer. The system will provide substantially the same effect under these conditions.

(ホ) The object to be detected by the detecting elements $Q_1$ to $Q_{19}$ is not limited to only holes as shown in the above embodiment but may also be bolts, pins, or marks.

(ヘ) In the above embodiment, the present position data stored in the present position register 125 is used for the new position data arithmetic unit 130. The former position data may be used instead of the present position data.

(ト) In the above embodiment, the new position data calculated by the new position data arithmetic unit 130 is stored in the new position data area 119b of the memory 119. On the other hand, it may be possible to store the data for the position difference error derived by the error arithmetic unit 129 in the memory 119 so that the new position data is calculated during operation and the operation result is output to the moving data calculating section 117.

(チ) In the above embodiment, although the present invention is applied to a horizontal multi-joint-type robot with three shafts, it is not limited to this case, but may also be applied to any shaft-equipped robot.

As given above, according to the present invention, the position difference error between the position of the working end of the robot and that of working spot such as a screw hole can be automatically detected. Thus, the position data can be corrected by, for example, the detected position difference error so that the period required to change the position data can be remarkably shortened in comparison with conventional devices, thereby improving the working efficiency of the assembly line containing the robot.

WHAT IS CLAIMED IS:

1.      A method for automatically correcting the work position of a robot comprising the steps of:

providing a plurality of work position detecting means on the working end of the robot so that the detecting means are disposed in a specific relationship with respect to the work position when the working end is accurately positioned at the work position;

checking   whether   the   detecting   means   are disposed in the predetermined relationship with respect to the work position when the robot is operated according to a pre-set work position;

detecting the degree of offset of the working end from the work position based on the detected degree of offset of the detecting means when the detecting means are not disposed in the predetermined specific relationship with respect to the work position; and

operating   the   robot   in   accordance   with   the detected degree of offset in order to compensate for the offset.

2.      The method as set forth in claim 1, wherein said detecting means optically detects the position, and each detecting means is turned ON when an area thereof exceeding a given value is disposed above the work position and is turned OFF when said area is less than said given value, and the magnitude of offset of the working end from the work position is detected by ON and OFF states of the detecting means.

3. The method as set forth in claim 2, wherein said robot is operated to move a given distance in a direction determined by the combination of ON and OFF states of the detecting means, which combination of ON and OFF states of the detecting means is representative of the offset of the working end from the work position.

4. The method as set forth in claim 3, wherein said robot performs a predetermined operation after its working end is disposed in the work position.

5. The method as set forth in claim 3, wherein the operation program of robot is modified by updating the work position data with fresh data after the working end is disposed in the work position.

6. A device for automatically correcting the work position for a robot comprising:

a movable arm including a working end for performing a required operation such as tightening a screw;

a driving mechanism for driving the movable arm;

a control unit operating the driving mechanism according to previously entered operation program to move the working end to its work position;

a plurality of work position detecting means attached to the working end so that a predetermined combination of detecting signals are produced when the working end is accurately positioned at the actual work position and combinations of detecting signals indicative of the degree of offset condition of the working end from the work position are produced when the working end is offset from the actual work position; and

a compensating signal generating means for supplying a compensation signal to the control unit for operating the movable arm in a direction compensating for the offset, which compensation signal generator means determines the magnitude of offset between the working end and the work position according to the combination of the detector signals.

7. The device as set forth in claim 6, wherein said work position detecting means judges whether more than a predetermined area of a detecting section thereof is disposed in the work position and produces one of an ON and OFF signal depending upon the result of judgment.

8. The device as set forth in claim 7, wherein said detecting section optically detects the work position when more than a predetermined area thereof is disposed above the work position.

9. The device as set forth in claim 6, 7 or 8, wherein said compensating signal generator produces a command to be supplied to said control unit for performing the required operation, such as the screw tightening operation, when a predetermined combination of the detector signals is received.

10. The device as set forth in claim 6, 7 or 8, wherein said compensating signal generating means produces a write-in command to be supplied to said control unit for replacing the previously entered work position data with fresh data of the work end position when a predetermined combination of detector signals is received.

11. A position compensating device for a robot characterized by comprising:

a detecting means arranged on the working end of the robot, being composed of a plurality of detecting elements distributed symmetrically within a predetermined area for detecting the presence of a working spot in the vicinity of an objective point of the working end;

a position compensating amount determining means for determining position compensating data which represents the direction and distance of movement of the working end according to the location and number of the detecting elements of the detecting means which detect the presence of the working spot when the working end is disposed at the objective point; and

a position compensating control means for actuating movable members of the robot in response to the determined position compensating data from the position compensating amount determining means so as to correct the position of the working end.

12. A position compensating device for a robot according to claim 11, wherein the above-mentioned detecting means is a chuck claw operable between its open and close positions and which is a component of an automatic screw tightening device secured to the end of the movable member of the robot, and the detecting element is the light-receiving end surface of a plurality of optical fibers distributed symmetrically over the end surface of the chuck claw, whereby the optical signals transmitted through the optical fibers are detected.

13. A position difference error detecting device for an assembly robot characterized by comprising;

a detecting body being disposed at the working end of the robot, said detecting body containing a plurality of detecting elements which are distributed over a given area to detect a working spot located in the vicinity of an objective point of the working end represented by position data of the robot; and

a position difference error arithmetic means

- 52 -

which calculates the distance and direction of the offset between the working spot and the working end according to the location and number of the detecting elements in the detecting body which detect the presence of the working spot after the working end has been moved to the objective point.

14. A position difference error detecting device for an assembly robot as set forth in claim 1, wherein said detecting body is a head member fixed to the tip end of a sensor body attached to the end of a movable member of the robot and the detecting element is the light-receiving ends of a plurality of optical fibers which are distributed selectively over the end surface of the head member so that an optical signal transmitted through each of the optical fibers is detected.

# FIG.1

# FIG.2

# FIG.3

# FIG.4

# FIG.5

d2

15b1

12a

15b4

d1

15b2

15a

d3

15a

15b3

# FIG.6

Q1

Q2

15b1

15b2

15a

15a

15b4

15b3

Q4

Q3

**FIG.7**

# FIG.8

ST

G₁

CALCULATE
MOVING DATA

PULSE DISTRIBUTION
OUTPUT

P_E

G₂

S₀ ~ S₁₃

POSITION COMPENSATING
DATA OUTPUT

# FIG.9

(A)   (B)   (C)   (D)

## FIG.10

STEP 1 — OUTPUT $G_1$

STEP 2 — READ OUT WORK POSITION DATA

STEP 3 — MOVE AUTOMATIC SCREW TIGHTENING TOOL TO DESTINATION

STEP 4 — OUTPUT $G_2$

STEP 5 — READ IN DISCRIMINATION OUTPUT

STEP 6 — $S_{13}$ ?

STEP 10 — OUTPUT $G_1$

STEP 7 — $S_0$ ?

STEP 8 — COMPENSATE WORK POSITION

STEP 11 — READ OUT WORK POSITION DATA

STEP 9 — OUTPUT NG

STEP 12 — SCREW TIGHTENING

STEP 13 — OPERATION FINISHED

STEP 14 — ALL OPERATIONS FINISHED

STEP 15 — RETURN TO INITIAL POSITION

# FIG.11

(A)

(B)

(C)

# FIG.12

# FIG.13

# FIG.14

# FIG. 15

113a
12a
113a
107c
107b
d2
113a
d1
113a
d3
113a

# FIG. 16

113a
107c
107b
Q14  Q13  Q19
Q8   Q2   Q7   Q12
Q15  Q3   Q1   Q6   Q18
113a
Q9   Q4   Q5   Q11
Q16  Q10  Q17
113a

FIG.17

# FIG.18

M

H

S_T

G

MOVING DATA CALCULATION

PULSE DISTRIBUTION OUTPUT

P_E

$S_2 \sim S_{19}$

POSITION VECTOR DATA OUTPUT

POSITION ERROR CALCULATION

NEW POSITION DATA CALCULATION/STORE

14/15

15/15

# FIG.19

# FIG.20

0109447

# INTERNATIONAL SEARCH REPORT

International Application No  PCT/JP83/00165

| I. CLASSIFICATION OF SUBJECT MATTER (if several classification symbols apply, indicate all) ³ |
|---|
| According to International Patent Classification (IPC) or to both National Classification and IPC |
| Int. Cl.³  G05B 19/18, 19/42, B25J 13/00, 19/00 |

## II. FIELDS SEARCHED

| Minimum Documentation Searched ⁴ | |
|---|---|
| Classification System | Classification Symbols |
| I P C | G05B 19/18, 19/42, G05D 3/00 |

| Documentation Searched other than Minimum Documentation to the Extent that such Documents are Included in the Fields Searched ⁵ | |
|---|---|
| Jitsuyo Shinan Koho | 1926 - 1983 |
| Kokai Jitsuyo Shinan Koho | 1971 - 1983 |

## III. DOCUMENTS CONSIDERED TO BE RELEVANT ¹⁴

| Category* | Citation of Document, ¹⁶ with indication, where appropriate, of the relevant passages ¹⁷ | Relevant to Claim No. ¹⁸ |
|---|---|---|
| X,Y | JP,A, 50-27266  (Toshiba Corp.) 20. March. 1975  (20. 03. 75) | 1 - 14 |
| Y | JP,A, 51-83985 (Tokyo Seimitsu Kabushiki Kaisha)  22. July. 1976  (22. 07. 76) | 2 - 10 |
| Y | JP,A, 52-4178  (Nippon Electric Co., Ltd.) 13. January. 1977  (13. 01. 77) | 11 - 14 |

* Special categories of cited documents: ¹⁵

"A"  document defining the general state of the art which is not considered to be of particular relevance

"E"  earlier document but published on or after the international filing date

"L"  document which may throw doubts on priority claim(s) or which is cited to establish the publication date of another citation or other special reason (as specified)

"O"  document referring to an oral disclosure, use, exhibition or other means

"P"  document published prior to the international filing date but later than the priority date claimed

"T"  later document published after the international filing date or priority date and not in conflict with the application but cited to understand the principle or theory underlying the invention

"X"  document of particular relevance; the claimed invention cannot be considered novel or cannot be considered to involve an inventive step

"Y"  document of particular relevance; the claimed invention cannot be considered to involve an inventive step when the document is combined with one or more other such documents, such combination being obvious to a person skilled in the art

"&"  document member of the same patent family

## IV. CERTIFICATION

| Date of the Actual Completion of the International Search ² | Date of Mailing of this International Search Report ³ |
|---|---|
| August 17, 1983  (17.08.83) | August 29, 1983  (29.08.83) |
| International Searching Authority ¹ | Signature of Authorized Officer ²⁰ |
| Japanese Patent Office | |

Form PCT/ISA/210 (second sheet) (October 1981)